# EUROPÄISCHE PATENTSCHRIFT

(11) **EP 0 922 617 B1**
(45) Veröffentlichungstag und Bekanntmachung des Hinweises auf die Patenterteilung: **05.12.2001**
(21) Anmeldenummer: 98120727.7
(22) Anmeldetag: 31.10.1998
(51) Int. Cl.: B60S 3/04, B05B 3/02

(54) **Hochdruckwaschvorrichtung für Fahrzeuge**
Cleaning apparatus with pressure jets for vehicles
Dispositif de lavage de véhicules par jets sous pression

(30) Priorität: 09.12.1997 DE 19754485
(43) Veröffentlichungstag der Anmeldung: 16.06.1999
(73) Patentinhaber: WashTec Holding GmbH, 86153 Augsburg (DE)
(72) Erfinder: Zeyer, Pierre, 68500 Wuenheim (FR)
(74) Vertreter: Charrier, Rolf, Dipl.-Ing.

(56) Entgegenhaltungen:
- WO-A-91/03395
- DE-A- 1 806 634
- US-A- 4 369 850

## Beschreibung

Die Erfindung betrifft eine Hochdruckwaschvorrichtung für Fahrzeuge, mit einem Gestell, mit einer in diesem ortsfest verlegten Wasserzuleitung, mit einer mit dieser verbundenen Anschlußarmatur, an welche das eine Ende eines flexiblen Schlauchstückes fest angeschlossen ist, mit einer am anderen, beweglichen Ende des Schlauchstückes vorgesehenen Spritzdüse und mit einer das bewegliche Schlauchende umgebenden, von dem Gestell getragenen Halterung, welche die seitliche Auslenkung des beweglichen Schlauchendes gegenüber einer durch die Anschlußarmatur und das daran fixierte Schlauchende verlaufenden Eintrittsachse begrenzt.

Bei einer derartigen, aus der DE-AS 1 806 634 bekannten Hochdruckwaschvorrichtung besteht die Halterung aus einem das bewegliche Schlauchende umgebenden Ring, der über mehrere Verbindungsstreben mit der Anschlußarmatur verbunden ist. Mehrere derartige Vorrichtungen können in einem portalartigen Gestell angeordnet sein, welches gegenüber dem Fahrzeug verfahrbar ist. Durch den aus der Spritzdüse austretenden Wasserstrahl erhält die Spritzdüse einen Rückstoß, wodurch das bewegliche Schlauchende eine hin- und herschlagende Bewegung ausführt, die seitlich durch den Ring begrenzt wird. Die hin- und herschlagende Bewegung ist jedoch völlig unkontrolliert. Ihre Frequenz kann zwar durch Regulierung des Wasserdruckes beeinflußt werden, wobei höherer Wasserdruck auch eine höhere Frequenz ergibt. Gleichzeitig ist jedoch mit höherem Wasserdruck auch ein höherer Wasserverbrauch verbunden. Da bei dieser Hochdruckwaschvorrichtung zu viel dem Zufall überlassen bleibt, läßt sich kein gutes, reproduzierbares Waschergebnis erzielen. Im übrigen ist der flexible Schlauch durch die unkontrollierbaren hin- und herschlagenden Bewegungen einem raschen Verschleiß ausgesetzt.

Es sind ferner Hochdruckwaschvorrichtungen für Fahrzeuge bekannt (vgl. DE 195 21 156 C1), bei denen eine motorisch antreibbare Hohlwelle in einem ortsfesten Gehäuse drehbar gelagert ist. Diese Hohlwelle trägt an ihrem einen Ende eine schräg zur Drehachse angeordnete Spritzdüse. Am anderen Ende der Hohlwelle ist eine sogenannte Drehdurchführung angeordnet, die am Gehäuse abgestützt ist. Zwischen Hohlwelle und Gehäuse ist eine Wellendichtung vorgesehen, die von dem unter Hochdruck stehenden Wasser beaufschlagt ist. Infolge dieses hohen Druckes wird die Dichtung mit hohem Druck an die Hohlwelle angedrückt und unterliegt daher einem hohen Verschleiß. Dieser Verschleiß wird noch dadurch erhöht, wenn zum Waschen Brauchwasser verwendet wird, welches feine Sandkörner enthalten kann.

Der Erfindung liegt daher die Aufgabe zugrunde, eine Hochdruckwaschvorrichtung der eingangs erwähnten Art zu schaffen, die einen guten und reproduzierbaren Wascheffekt hat und dabei verschleißarm arbeitet.

Dies wird bei einer Hochdruckwaschvorrichtung für Fahrzeuge der eingangs erwähnten Art dadurch erreicht, daß die Halterung gegenüber dem Gestell und eine zur Eintrittsachse koaxiale Drehachse drehbar gelagert ist und mittels einer Antriebsvorrichtung rotierend antreibbar ist, daß zur Zwangsführung des beweglichen Schlauchendes an der Halterung eine Führungsbuchse vorgesehen ist, deren Achse schräg zur Drehachse verläuft, und daß zwischen dem beweglichen Schlauchende und der Spritzdüse ein zylindrisches Lagerstück vorgesehen ist, welches in die Führungsbuchse eingreift und gegenüber dieser drehbar ist.

Bei dieser Ausgestaltung der Hochdruckwaschvorrichtung wird die Düse zwangsweise auf einer kegelstumpfförmigen Bahn geführt, wodurch sich ein Spritzkegel mit vorbestimmter Form ergibt. Der Kegelwinkel dieses Spritzkegels kann durch unterschiedliche Schrägstellung der Achse der Führungsbuchse gegenüber der Drehachse konstruktiv für den jeweiligen Einsatzzweck festgelegt werden, er bleibt dann jedoch immer gleich. Da die Halterung von einer eigenen Antriebsvorrichtung angetrieben wird, läßt sich die Drehgeschwindigkeit der Hatlerung und damit der Spritzdüse regulieren und für den jeweiligen Einsatzzweck optimieren. Die Spritzdüse führt eine genau kontrollierbare Rotation aus, wodurch sich ein optimales und reproduzierbares Waschergebnis erreichen läßt. Da das bewegliche Schlauchende auf einer genau definierten Kreisbahn bewegt wird, und sich das Lagerstück in der Führungsbuchse frei drehen kann, ist das Schlauchstück immer nur einer kontrolliert ablaufenden Biegebelastung unterworfen und weist eine hohe Lebensdauer auf. Eine Verdrehung findet nur zwischen dem Lagerstück und der Führungsbüchse statt. Durch geeignete Werkstoffpaarungen, z.B. rostfreier Stahl einerseits und Kunststoff andererseits, lassen sich gute Laufeigenschaften und damit geringer Verschleiß erzielen. Probleme, die sonst bei Hochdruckwaschvorrichtungen infolge der Drehdurchführungen auftreten, werden bei der erfindungsgemäßen Hochdruckwaschvorrichtung überhaupt ausgeschlossen, da sie innerhalb des wasserführenden Systems keine Drehdurchführung enthält. Die neue Hochdruckwaschvorrichtung ist daher besonders bei Einsatz von Brauchwasser hervorragend anwendbar.

Vorteilhafte Ausgestaltungen der Erfindung sind in den Unteransprüchen gekennzeichnet.

Die Erfindung ist in folgendem, anhand eines in der Zeichnung dargestellten Ausführungsbeispieles näher erläutert. Es zeigen:
- Figur 1: einen Querschnitt der Hochdruckwaschvorrichtung nach der Linie I-I der Figur 2,
- Figur 2: einen Längsschnitt nach der Linie II-II der Figur 1,

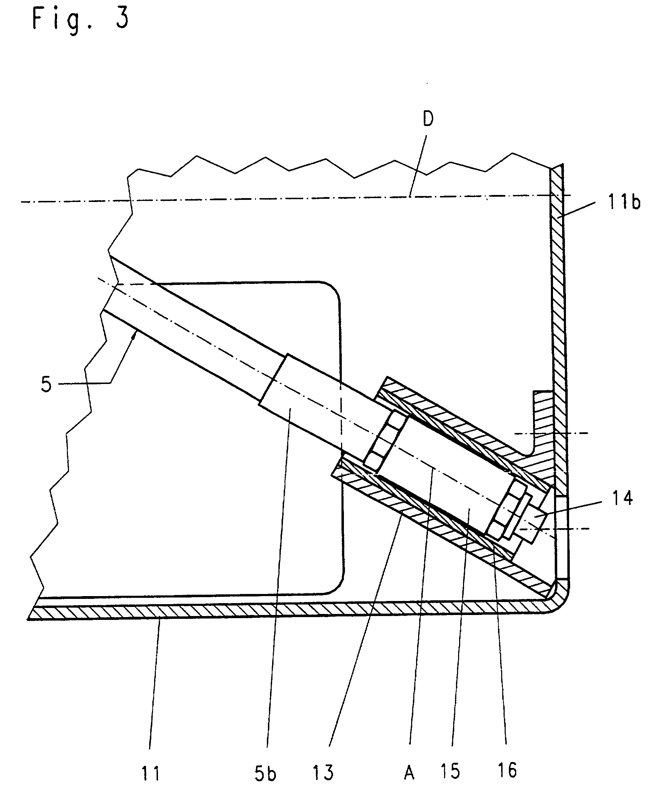

- Figur 3: Einzelheiten an der Stelle III-III der Figur 2.

In einem Gestell 1, welches bei dem gezeigten Ausführungsbeispiel von einem rohrförmigen Gehäuse 2 umgeben ist, ist eine Wasserzuleitung 3 ortsfest verlegt. Diese Wasserzuleitung 3 weist im Beriech jeder Hochdruckwaschvorrichtung eine Anschlußarmatur 4 auf, an welche das eine Ende 5a eines flexiblen Schlauchstückes 5 fest angeschlossen ist. Mit dem Gestell 1 ist ein hohler Lagerzapfen 6 verbunden, welcher den flexiblen Schlauch 5 mit Abstand umgibt. Der Lagerzapfen 6 ist von einer Nabe 7 konzentrisch umgeben, die über die Kugellager 8 am Lagerzapfen 6 drehbar gelagert ist. Die Drehachse D der Nabe 7 fluchtet mit einer Eintrittsachse E, welche durch die Anschlußarmatur 4 und das daran fixierte Schlauchende 5a verläuft.

Die Nabe 7 ist mit einer Tragscheibe 10 fest verbunden, die ihrerseits eine Halterung 11 trägt. Die Halterung 11 ist durch einen Topf aus Blech gebildet, dessen Rand 11a mit der Tragscheibe 10 verschraubt ist.

An dem äußeren Rand der Tragscheibe 10 ist ein Zahnkranz 12 befestigt, der Bestandteil einer Antriebsvorrichtung bildet, mittels welcher die Tragscheibe 10 und damit die Halterung 11 rotierend antreibbar ist.

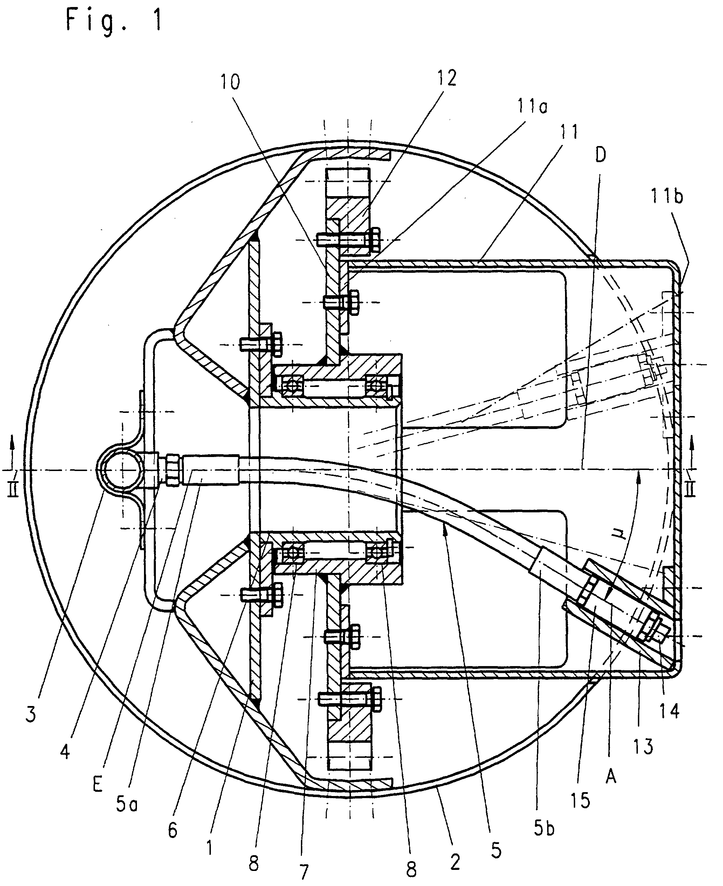

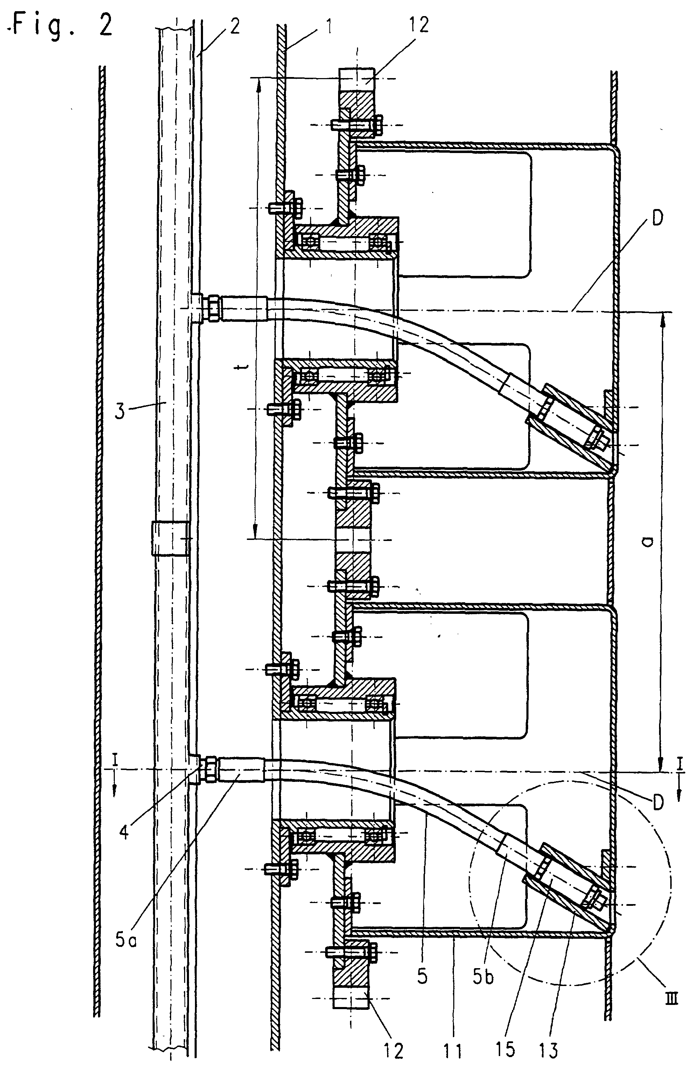

An der Halterung 11, genauer gesagt, an deren Bodenteil 11a, ist eine Führungsbuchse 13 angeordnet, deren Achse in spitzem Winkel µ schräg zur Drehachse D verläuft. Durch Veränderung dieses spitzen Winkels µ läßt sich konstlruktiv der Kegelwinkel des von der Spritzdüse 14 beschriebenen Spritzkegels festlegen. Dies ist in Figur 1 und 2 mit strichpunktierten Linien angedeutet. Zwischen der Spritzdüse 14 und dem beweglichen Schlauchende 5b ist ein zylindrisches Lagerstück 15 vorgesehen, welches in die Führungsbüchse 13 eingreift und gegenüber dieser drehbar ist. Um die Reibung zwischen dem zylindrischen Lagerstück 15 und der Führungsbuchse möglichst klein zu halten, ist die Führungsbuchse 13 zweckmäßig mit einer Kunststoffbuchse ausgekleidet. Das Lagerstück 15 besteht dann zweckmäßig aus rostfreiem Stahl. Das zylindrische Lagerstück 15 kann auch durch einen an die Soritzdüse 14 angrenzenden Düsenkörper gebildet werden.

Das flexible Schlauchstück kann relativ kurz gewählt werden. Da der Einzeldurchsatz pro Spritzdüse nicht sehr groß ist, kann hierfür ein dünner, extrem flexibler Schlauch mit hoher Biegewechselfestigkeit, ähnlich wie er bei Bremsanlagen in Kraftfahrzeugen eingesetzt wird, verwendet werden, was zu einer erhöhten Lebensdauer des Gesamtsystems führt.

Wenn der Zahnkranz 12 drehend angetrieben wird, wird hierdurch die Halterung 11 mit vorbestimmter Drehgeschwindigkeit in rotierende Bewegung versetzt, wodurch die Achse A der Führungsbuchse 13 auf einem Kegelstumpf rotiert. Dementsprechend rotiert auch die von dem Lagerstück 15 getragene Spritzdüse 14 auf einem Kegelstumpf mit einem Kegelwinkel von 2 x µ. Bei jeder Umdrehung der Halterung 11 dreht sich die Führungsbuchse 13 einmal um das zylindrische Lagerstück 15 ohne daß diese Drehbewegung auf das Schlauchstück 6 übertragen wird. Dieses ist nur einer sich bezüglich der Biegerichtung kontrolliert ändernden Biegebelastung unterworfen.

Es können mit Vorteil auch mehrere gleichartig ausgebildete Hochdruckwaschvorrichtungen der beschriebenen Art, wie es in Figur 2 dargestellt ist, in dem Gestell 1 in einer Reihe nebeneinander angeordnet werden. Dabei sollte der gegenseitige Abstand a ihrer Drehachsen D dem Teilkreisdurchmesser t ihrer Zahnkränze 12 entsprechen. Auf diese Weise können die Zahnkränze benachbarter Hochdruckwaschvorrichtungen, wie es in Figur 2 dargestellt ist, kämmend ineinandergreifen. Von einem einzigen Antriebsmotor aus können auf diese Weise eine Vielzahl von Hochdruckwaschvorrichtungen, die beispielsweise nebeneinander in einem Waschportal angeordnet sind, angetrieben werden, wobei die Spritzdüsen 14 benachbarter Hochdruckwaschvorrichtungen in entgegengesetzten Drehrichtungen rotieren. Wenn eine gleichlaufende Drehrichtung aller Spritzdüsen gewünscht wird, kann dies über einen gemeinsamen Zahnriemen- oder Kettenantrieb erfolgen.

## Patentansprüche

1. Hochdruckwaschvorrichtung für Fahrzeuge, mit einem Gestell (1), mit einer in diesem ortsfest verlegten Wasserzuleitung (3), mit einer mit dieser verbundenen Anschlußarmatur (4), an welche das eine Ende (5a) eines flexiblen Schlauchstückes (5) fest angeschlossen ist, mit einer am anderen, beweglichen Ende (5b) des Schlauchstückes (5) vorgesehenen Spritzdüse (14) und mit einer das bewegliche Schlauchende (5b) umgebenden, von dem Gestell (1) getragenen Halterung (11), welche die seitliche Auslenkung des beweglichen Schlauchendes (5b) gegenüber einer durch die Anschlußarmatur (4) und das daran fixierte Schlauchende (5a) verlaufenden Eintrittsachse begrenzt, **dadurch gekennzeichnet, daß** die Halterung (11) gegenüber dem Gestell (1) um eine zur Eintrittsachse (E) koaxiale Drehachse (D) drehbar gelagert und mittels einer Antriebsvorrichtung (12) rotierend antreibbar ist, daß zur Zwangsführung des beweglichen Schlauchendes (5b) an der Halterung (11) eine Führungsbuchse (13) vorgesehen ist, deren Achse (A) schräg zur Drehachse (D) verläuft, und daß zwischen dem beweglichen Schlauchende (5b) und der Spritzdüse (14) ein zylindrisches Lagerstück (15) vorgesehen ist, welches in die Führungsbuchse (13) eingreift und gegenüber dieser drehbar ist.

2. Vorrichtung nach Anspruch 1, **dadurch gekennzeichnet, daß** mit dem Gestell (1) ein hohler, zur Drehachse (D) konzentrischer Lagerzapfen (6) verbunden ist, welcher den flexiblen Schlauch (5) mit Abstand umgibt und welcher die Lager (8) für die Halterung (11) trägt.

3. Vorrichtung nach Anspruch 2, **dadurch gekennzeichnet, daß** der Lagerzapfen (6) von einer Nabe (7) konzentrisch umgeben ist, die mit einer Tragscheibe (10) fest verbunden ist, an welcher die Halterung (11) befestigt ist.

4. Vorrichtung nach Anspruch 3, **dadurch gekennzeichnet, daß** die Halterung (11) durch einen Topf aus Blech gebildet ist, an dessen Bodenteil (11b) die Führungsbuchse (13) angeordnet ist und dessen Randbereich (11a) mit der Tragscheibe (10) verbunden ist.

5. Vorrichtung nach Anspruch 3 oder 4, **dadurch gekennzeichnet, daß** an dem äußeren Rand der Tragscheibe (10) ein Zahnkranz (12) der Antriebsvorrichtung angeordnet ist.

6. Vorrichtung nach einem der vorhergehenden Ansprüche, **dadurch gekennzeichnet, daß** mehrere gleichartige Hochdruckwaschvorrichtungen in dem Gestell (1) in einer Reihe nebeneinander angeordnet sind (Fig. 2)

7. Vorrichtung nach Anspruch 5 und 6, **dadurch gekennzeichnet, daß** die Hochdruckwaschvorrichtungen in einem gegenseitigen Abstand (a) angeordnet sind, der dem Teilkreisdurchmesser (t) ihrer Zahnkränze (12) entspricht, so daß die Zahnkränze benachbarter Hochdruckwaschvorrichtungen kämmend ineinandergreifen.

8. Vorrichtung nach einem der vorhergehenden Ansprüche, **dadurch gekennzeichnet, daß** das zylindrische Lagerstück (15) durch einen an die Spritzdüse angrenzenden Düsenkörper gebildet ist.

9. Vorrichtung nach einem der vorhergehenden Ansprüche, **dadurch gekennzeichnet, daß** die Führungsbuchse (13) mit einer Kunststoffbuchse (16) ausgekleidet ist.

## Claims

1. High-pressure washing device for vehicles, with a frame (1), with a water delivery pipe (3) laid in the latter in a fixed position, with a connecting fitting (4) which is connected to this pipe and to which one end (5a) of a flexible length of hose (5) is firmly connected, with a spray nozzle (14) provided at the other moving end (5b) of the length of hose (5), and with a mounting (11) which surrounds the moving end (5b) of the hose and is supported by the frame (1) and which limits the lateral deflection of the moving end (5b) of the hose in relation to an inlet axis running through the connecting fitting (4) and the end (5a) of the hose fixed thereto, **characterised in that** the mounting (11) is mounted rotatable relative to the frame (1) about an axis of rotation (D) coaxial with the inlet axis (E) and can be driven in rotation by means of a driving device (12), **in that** a guide sleeve (13) the axis (A) of which runs obliquely to the axis of rotation (D), is provided on the mounting (11) for forcible guidance of the moving end (5b) of the hose, and **in that** a cylindrical bearing element (15), which engages in the guide sleeve (13) and is rotatable relative to it, is provided between the moving end (5b) of the hose and the spray nozzle (14).

2. Device according to claim 1, **characterised in that** a hollow bearing journal (6) which is concentric with the axis of rotation (D) and surrounds the flexible hose (5) at a distance and carries the bearings (8) for the mounting (11), is connected to the frame (1).

3. Device according to claim 2, **characterised in that** the bearing journal (6) is surrounded concentrically by a hub (7) which is connected firmly to a supporting disc (10) to which the mounting (11) is fastened.

4. Device according to claim 3, **characterised in that** the mounting (11) is formed by a sheet metal pot on whose bottom part (11b) is disposed the guide sleeve (13) and whose edge area (11a) is connected to the supporting disc (10).

5. Device according to claim 3 or 4, **characterised in that** a gear ring (12) of the driving device is disposed on the outer edge of the supporting disc (10).

6. Device according to one of the preceding claims, **characterised in that** a plurality of high-pressure washing devices of the same kind are disposed in the frame (1) next to one another in a row (fig. 2).

7. Device according to claim 5 and 6, **characterised in that** the high-pressure washing devices are disposed with a mutual spacing (a) which corresponds to the pitch circle diameter (t) of their gear rings (12) so that the gear rings of neighbouring high-pressure washing devices mesh with one another.

8. Device according to one of the preceding claims, **characterised in that** the cylindrical the cylindrical bearing element (15) is formed by a nozzle body adjoining the spray nozzle.

9. Device according to one of the preceding claims, **characterised in that** the guide sleeve (13) is lined with a plastic sleeve (16).

## Revendications

1. Dispositif de lavage de véhicules par jets à haute pression, comprenant un bâti (1), une conduite d'admission d'eau (3) posée de manière fixe dans celui-ci, un raccord de tuyauterie (4) relié à celle-ci et auquel est raccordé de manière fixe une extrémité (5a) d'un tuyau flexible (5), une buse de projection (14) prévue sur l'autre extrémité (5b) mobile du tuyau (5) et un dispositif de retenue (11), qui est supporté par le bâti (1) et entoure l'extrémité mobile (5b) du tuyau et qui limite le déplacement latéral de l'extrémité mobile (5b) du tuyau par rapport à un axe d'introduction qui s'étend à travers le raccord de tuyauterie (4) et l'extrémité (5a) du tuyau raccordée à celui-ci, **caractérisé en ce que** le dispositif de retenue (11) est monté de manière à pouvoir tourner par rapport au bâti (1) autour d'un axe de rotation (D) coaxial à l'axe d'introduction (E) et peut être actionné en rotation au moyen d'un dispositif d'entraînement (12), **en ce que**, pour le guidage forcé de l'extrémité mobile (5b) du tuyau, il est prévu au dispositif de retenue (11), un manchon de guidage (13), dont l'axe (A) s'étend en oblique par rapport à l'axe de rotation (D), et **en ce qu'**il est prévu, entre l'extrémité mobile (5b) du tuyau et la buse de projection (14), une pièce de support cylindrique (15), qui pénètre dans le manchon de guidage (13) et peut tourner par rapport à celui-ci.

2. Dispositif selon la revendication 1, **caractérisé en ce qu'**un tourillon (6) creux, concentrique par rapport à l'axe de rotation (D), est relié au bâti (1), lequel tourillon entoure à distance le tuyau flexible (5) et lequel supporte les coussinets (8) du dispositif de retenue (11).

3. Dispositif selon la revendication 2, **caractérisé en ce que** le tourillon (6) est entouré concentriquement par un moyeu (7), qui est assemblé de manière inamovible avec un disque de support (10), contre lequel est fixé le dispositif de retenue (11).

4. Dispositif selon la revendication 3, **caractérisé en ce que** le dispositif de retenue (11) est formé par un caisson en tôle, contre le fond (11b) duquel est disposé le manchon de guidage (13) et dont la zone de bordure (11a) est assemblée avec le disque de support (10).

5. Dispositif selon la revendication 3 ou 4, **caractérisé en ce qu'**une couronne dentée (12) du dispositif d'entraînement est montée contre le bord extérieur du disque de support (10).

6. Dispositif selon l'une des revendications précédentes, **caractérisé en ce que** plusieurs dispositifs de lavage par jets à haute pression, du même type, sont disposés en rang côte à côte dans le bâti (1) (fig. 2).

7. Dispositif selon les revendications 5 et 6, **caractérisé en ce que** les dispositifs de lavage par jets à haute pression sont écartés les uns des autres d'une distance (a) qui est égale au diamètre (t) primitif de référence de leurs couronnes dentées (12), de telle sorte que les couronnes dentées de dispositifs de lavage à haute pression voisins engrènent l'une dans l'autre.

8. Dispositif selon l'une des revendications précédentes, **caractérisé en ce que** la pièce de support (15) cylindrique est formée par un corps de buse contigu à la buse de projection.

9. Dispositif selon l'une des revendications précédentes, **caractérisé en ce que** le manchon de guidage (13) est revêtu sur sa face intérieure d'un manchon en matière plastique (16).
